# EUROPÄISCHE PATENTSCHRIFT

(11) **EP 1 917 338 B1**
(45) Veröffentlichungstag und Bekanntmachung des Hinweises auf die Patenterteilung: **14.12.2011**
(21) Anmeldenummer: 06776739.2
(22) Anmeldetag: 10.08.2006
(51) Int. Cl.: C11D 3/37, C11D 3/18, B01D 19/04, C11D 1/72

(54) **SCHAUMREGULATORGRANULAT**
FOAM REGULATOR GRANULES
GRANULAT REGULATEUR DE MOUSSE

(30) Priorität: 24.08.2005 DE 102005040274
(43) Veröffentlichungstag der Anmeldung: 07.05.2008
(73) Patentinhaber: Henkel AG & Co. KGaA, 40589 Düsseldorf (DE)
(72) Erfinder: BRÜCKNER, Erik, 40723 Hilden (DE); LAMBOTTE, Alexander, 40597 Düsseldorf (DE); MIDDELHAUVE, Birgit, 40789 Monheim (DE)
(86) Internationale Anmeldenummer: PCT/EP2006/007918
(87) Internationale Veröffentlichungsnummer: WO 2007/022871

(56) Entgegenhaltungen:
- EP-A2- 1 075 864
- WO-A-98/23712
- DE-A- 10 108 459
- DE-A1- 10 001 945
- DE-A1- 19 837 195

## Beschreibung

Die Erfindung betrifft in Wasch- oder Reinigungsmitteln einsetzbare teilchenförmige Schaumregulierungsmittel sowie ein Verfahren zu deren Herstellung und ihre Verwendung in Wasch- und Reinigungsmitteln, die bestimmte Tenside enthalten.

Die schaumregulierende Wirkung bestimmter Silikone wie auch von Kombinationen aus Paraffinen mit Bisfettsäureamiden in wäßrigen tensidhaltigen Systemen ist bekannt. So beschreibt zum Beispiel die europäische Patentschrift EP 0 309 931 B1 zur Verwendung in Wasch- und Reinigungsmitteln geeignete teilchenförmige Schaumregulierungsmittel, die aus einem wasserlöslichen tensidfreien Trägermaterial und einem daran adsorbierten siloxanfreien Entschäumergemisch aus 5-60 Gew.-% Weich- und/oder Hartparaffin, 20-90 Gew.-% mikrokristallinem Paraffinwachs mit bestimmtem Schmelzbereich und 5-20 Gew.-% eines von C₂₋₇-Diaminen und C₁₂₋₂₂-Fettsäuren abgeleiteten Diamids in feinverteilter Form. Die Herstellung solcher teilchenförmiger Schaumregulierungsmittel erfolgt mittels Sprühtrocknung einer wäßrigen Aufschlämmung, welche das Trägermaterial und das Entschäumergemisch enthält. Die Entschäumerleistung des Entschäumergemisches wird als unzureichend angegeben, wenn man es auf ein teilchenförmiges Waschmittel aufsprüht.

Die Verwendung schaumregulierender homogener Gemische aus nichtionischem Tenside und einem Schaumregulatorsystem, das Paraffinwachs und Bisfettsäureamide enthält, zur Verbesserung der Herstellbarkeit und der Produkteigenschaften extrudierter Wasch- und Reinigungsmittel ist aus der internationalen Patentanmeldung WO 96/26258 bekannt

Gegenstand der deutschen Offenlegungsschrift DE 23 38 468 ist ein Waschmittel mit einem Gehalt an einem Silikonentschäumer, der gegen Wechselwirkungen mit den Waschmittelbestandteilen geschützt ist. Zu seiner Herstellung werden wäßrige Schmelzen, die den Silikonentschäumer sowie eine Trägersubstanz, zum Beispiel Polyglykol, enthalten, zunächst sprühgetrocknet und die erhaltenen Partikel in einem fluidisierten Bett eines festen, wasserlöslichen Hüllmaterials mit einem Überzug versehen. Als Überzugsmaterial können übliche in Waschmitteln verwendete Salze, insbesondere Tripolyphosphat oder Carboxymethylcellulose verwendet werden. Ein solches mehrstufiges Herstellungsverfahren ist vergleichsweise technisch aufwendig.

Die deutsche Offenlegungsschrift DE 31 28 631 beschreibt die Herstellung von schaumgedämpften Waschmitteln mit einem Gehalt an Silikonentschäumern, die mikroverkapselt sind. Dabei wird das Silikon in einer wäßrigen Lösung eines filmbildenden Polymeren dispergiert und die Dispersion - getrennt von den übrigen in Wasser gelösten beziehungsweise dispergierten Waschmittelbestandteilen - über eine besondere Leitung der Sprühtrocknungsanlage zugeführt. Die Vereinigung der beiden Teilströme erfolgt im Bereich der Sprühdüse. Als filmbildende Polymere kommen zum Beispiel Celluloseether, Stärkeether oder synthetische wasserlösliche Polymere sowie deren Gemische in Frage. Die Bildung der Mikrokapseln erfolgt spontan in der Sprühdüse oder durch vorheriges Ausfällen durch Zugabe von Elektrolytsalzen zur Silikondispersion. Das beschriebene Verfahren ist zwangsläufig an die Herstellung sprühgetrockneter Waschmittel gebunden. Eine Übertragung auf anderweitig, zum Beispiel durch Granulierung hergestellte Wasch- und Reinigungsmittel oder auch auf andere Einsatzgebiete, ist bei dieser Arbeitsweise nicht möglich.

Die europäische Patentanmeldung EP 097 867 beschreibt ein Verfahren zur Herstellung mikroverkapselter Entschäumeröle durch Mischen einer Silikonemulsion mit einer wäßrigen Lösung von Carboxymethylcellulose und Ausfällen der Mikrokapseln durch Zusatz von Elektrolyten, insbesondere mehrwertiger Salze oder organischer Lösungsmittel. Es bereitet erhebliche Schwierigkeiten, die für eine ausreichende Schaumdämpfung erforderlichen geringen Mengen an Silikon-Mikrokapseln in einer vergleichsweise großen Waschpulvermenge homogen zu verteilen.

Die deutsche Offenlegungsschrift DE 34 36 194 beschreibt ein Verfahren zur Herstellung eines schüttfähigen Entschäumergranulats durch Sprühtrocknen einer wäßrigen, filmbildende Polymere enthaltenden Entschäumerdispersion. Zwecks Herstellung eines Granulates der Zusammensetzung 1 bis 10 Gew.-% wasserunlöslicher Entschäumerwirkstoff, 0,2 bis 2 Gew.-% eines Gemisches aus Natriumcarboxymethylcellulose und Methylcellulose im Gewichtsverhältnis 80 : 20 bis 40 : 60, 70 bis 90 Gew.-% an anorganischen, in Wasser löslichen oder dispergierbaren Trägersalzen, Rest Wasser, läßt man eine 0,5 bis 8 Gew.-% des Celluloseethergemisches enthaltende wäßrige Lösung bei einer Temperatur von 15 bis 60 °C so lange quellen, bis die Viskosität der Lösung mindestens 75 % der Viskosität beträgt, die bei vollständiger Quellung der Celluloseether-Lösung gemessen wird, worauf man in dieser Lösung den Entschäumerwirkstoff dispergiert und nach Zusatz der Trägersalze und gegebenenfalls Wasser die homogenisierte Dispersion sprühtrocknet. Als Entschäumerwirkstoffe werden Organopolysiloxane, Paraffine sowie Gemische aus Organopolysiloxanen und Paraffinen eingesetzt. Der Entschäumerwirkstoffgehalt beträgt 1 bis 10 Gew.-%, vorzugsweise 3 bis 7 Gew.-%. Das Trägersalz besteht vorzugsweise aus einem Gemisch von Natriumsilikat, Natriumtripolyphosphat und Natriumsulfat.

Aus der europäischen Patentschrift EP 0 337 523 B1 ist ein Verfahren zur Herstellung pulverförmiger Waschmittel bekannt, die mindestens 5 Gew.-% anionisches Tensid, 20-80 Gew.-% Alumosilikat und in Wasser sowie anionischen und nichtionischen Tensiden im wesentlichen unlösliches Paraffinwachs enthalten, welches das Mitversprühen oder nachträgliche Aufsprühen des Paraffins auf das vorgefertigte Waschmittelteilchen als wesentlichen Verfahrensschritt umfaßt. Das Paraffinwachs kann dabei auch in Form einer Mischung mit nichtionischen Tensiden eingesetzt werden.

Wenn man gemäß der in dem letztgenannten Dokument offenbarten Variante das Paraffinwachs nicht alleine, sondern in Kombination mit einem bekanntlich seine Schaumregulatorwirkung verstärkenden, aber in der Regel bei Raumtemperatur festen Bisfettsäureamid einsetzen will, kann man gemäß der internationalen Patentanmeldung WO 00/36063 das Problem der Verstopfung der verwendeten Rohrleitungen und Düsen wegen der Gefahr der Verfestigung des Bisfettsäureamids durch die Verwendung einer wäßrigen Schaumregulatoremulsion, die 16 Gew.-% bis 70 Gew.-% Schaumregulatorwirkstoff auf Paraffinwachs- und/oder Silikonölbasis, 2 Gew.-% bis 15 Gew.-% nichtionischen und/oder anionischen Emulgator sowie nicht mehr als 80 Gew.-% Wasser enthält, lösen. Teilchen mit noch erhöhter Stabilität können gemäß der internationalen Patentanmeldung WO 02/074894 bei Einsatz von festem Trägermaterial, welches Alkalicarbonat und eine Brønsted-Säure enthält, erhalten werden.

Man beobachtet allerdings, daß nicht in sämtlichen Wasch- oder Reinigungsmitteln, die übliche teilchenförmige Schaumregulatoren enthalten, die Entschäumerleistung des Schaumregulators immer gleich ist. Insbesondere bei derartigen Mitteln, die verzweigtkettige Tenside enthalten, kann es zum Auftreten von besonders schwer zu dämpfendem Schaum kommen. Man ist daher bestrebt, die schaumregulierende Wirkung der bekannten Entschäumer noch weiter zu verbessern.

Überraschenderweise wurde nun gefunden, daß man zu sehr guten Entschäumerleistungen gelangt, wenn man ein Schaumregulierungsmittel mit einem angepassten Silikon-Schaumregulatorsystem einsetzt.

Gegenstand der Erfindung ist ein teilchenförmiges Schaumregulatorgranulat, erhältlich durch Aufbringen einer wäßrigen Schaumregulatoremulsion, die 16 Gew.-% bis 70 Gew.-% Schaumregulatorwirkstoff auf Basis einer Kombination aus Paraffinwachs und Silikon, 2 Gew.-% bis 15 Gew.-% nichtionischen und/oder anionischen Emulgator sowie nicht mehr als 80 Gew.-% Wasser enthält, auf ein festes Trägermaterial, woran sich gegebenenfalls ein Trocknungsschritt anschließt, und das dadurch gekennzeichnet ist, daß das Silikon enthält (A) Organopolysiloxan mit mindestens einem siliziumgebundenen Substituenten der Formel X-Ph, worin X eine divalente organische Gruppe, die über ein Kohlenstoffatom an Silizium gebunden ist, und Ph eine aromatische Gruppe bedeutet, (B) ein Organosiliziumharz und (C) einen hydrophoben Füllstoff, und daß das Trägermaterial Alkalicarbonat und eine Brønsted-Säure enthält.

Geeignete Komponenten (A), (B) und (C) sind insbesondere in der europäischen Patentschrift EP 1 075 864 beschrieben. Die Summe der Komponenten (A), (B) und (C) wird im folgenden gegebenenfalls auch als Silikonöl bezeichnet. Der erfindungsgemäß zum Einsatz kommende Schaumregulator enthält neben dieser Kombination aus den Komponenten (A), (B) und (C) schaumregulierendes Paraffinwachs (D); dieses ist vorzugsweise bei Raumtemperatur fest und liegt bei 100 °C in vollständig flüssiger Form vor.

Die teilchenförmigen Schaumregulatorgranulate werden vorzugsweise durch Aufbringen, insbesondere Aufsprühen, einer wäßrigen Schaumregulatoremulsion, die 16 Gew.-% bis 70 Gew.-% der Schaumregulatorwirkstoff-Kombination aus (A), (B), (C) sowie (D) und 2 Gew.-% bis 15 Gew.% nichtionischen und/oder anionischen Emulgator in Wasser enthält, auf ein festes Trägermaterial, woran sich gegebenenfalls ein Trocknungsschritt anschließt, hergestellt. Das Trägermaterial enthält Alkalicarbonat und eine Brønsted-Säure.

Es ist bevorzugt, daß eine als Bestandteil des Trägermaterials zum Einsatz kommende Brønsted-Säure bei 25 °C in fester Form vorliegt. Sie weist bei 25 °C eine Wasserlöslichkeit von vorzugsweise mindestens 100 g/l auf. Vorzugsweise wird sie aus den Di-und Tricarbonsäuren, deren sauren Salzen, den sauren Salzen von anorganischen Säuren, insbesondere NaHSO₄, Na₂HPO₄ und NaH₂PO₄, und deren Mischungen ausgewählt. In einer bevorzugten Ausführungsform der Erfindung handelt es sich bei der Brønsted-Säure um Citronensäure. Das verwendete Trägermaterial enthält vorzugsweise Alkalicarbonat und eine Brønsted-Säure in Gewichtsverhältnissen von 1:1 bis 100:1, insbesondere von 20:3 bis 80:3. Das Trägermaterial weist vorzugsweise 40 Gew.-% bis 90 Gew.-%, insbesondere 60 Gew.-% bis 80 Gew.-% Alkalicarbonat und 0,5 Gew-% bis 20 Gew.-%, insbesondere 1 Gew.-% bis 9 Gew.-% einer Brønsted-Säure auf. Es kann dabei allein aus Alkalicarbonat und der Brønsted-Säure bestehen oder zusätzlich weitere teilchenförmige Bestandteile enthalten, wobei feste und/oder in fester Form konfektionierte Wasch- oder Reinigungsmittelbestandteite in Frage kommen. Dazu gehören beispielsweise übliche durch Sprühtrocknung wäßriger Aufschlämmungen ihrer Inhaltsstoffe hergestellte Pulver, feste Bleichmittel auf Sauerstoffbasis, beispielsweise Alkalipercarbonate oder Alkaliperborate, die als sogenannte Monohydrate oder Tetrahydrate vorliegen können, pulvorförmig konfektionierte Bleichaktivatoren, beispielsweise ein Tetraacetylethylendiamin-Granulat, nicht durch konventionelles Sprühtrocknen hergestellte Aniontensidcompounds mit einem Gehalt von über 80 Gew.%, insbesondere über 90 Gew.-% an Alkylsulfat mit Alkylkettenlängen im Bereich von C₁₂ bis C₁₈, wobei der Rest im wesentlichen aus anorganischen Salzen und Wasser besteht, in granularer Form vorliegende Enzyme, beispielsweise ein Enzymextrudat oder ein Mehrenzymgranulat, pulverförmig konfektionierter Soil release-Wirkstoff, pulverförmige Polycarboxylat-Cobuilder, beispielsweise Alkalicitrat, und gegebenenfalls auch feste anorganische Buildermaterialien, wie Zeolith-A, Zeolith-P, Zeolith-X und kristalline Schichtsilikate, und sonstige anorganische Salze wie Alkalisulfat, Alkalihydrogencarbonat und Alkalisilikat sowie deren Mischungen. Vorzugsweise weist das Trägermaterial eine Kombination aus Alkalihydrogencarbonat und Alkalicarbonat auf, wobei deren Gewichtsverhältnis vorzugsweise 99:1 bis 10:90, insbesondere 95:5 bis 50:50, beträgt. Bevorzugtes Alkalimetall in den genannten Salzen wie auch im Alkalicarbonat ist dabei Natrium.

In einer bevorzugten Ausführungsform des Verfahrens führt man im wesentlichen wie in der internationalen Patentanmeldung WO 00/36063 beschrieben in einem Granulationsmischer eine Aufbaugranulation derart durch, daß man eine Menge von 40 bis 110 Gewichtsteilen, insbesondere 60 bis 90 Gewichtsteilen an Trägermaterial, das vorzugsweise zusätzlich Alkalisulfat und/oder Alkalihydrogencarbonat enthalten kann, intensiv mischt und unter Granulieren eine Menge von 15 bis 50 Gewichtsteilen, insbesondere 25 bis 35 Gewichtsteilen der gegebenenfalls auf eine Temperatur im Bereich von 70 °C bis 180 °C erwärmten Schaumregulatoremulsion zusetzt. Geringe Mengen Wasser, vorzugsweise nicht mehr als 10 Gewichtsteile, insbesondere 1 bis 5 Gewichtsteile Wasser können, nach oder vorzugsweise vor dem Zusatz der Schaumregulatoremulsion, gewünschtenfalls ebenfalls zugesetzt werden. Feinteilige Stoffe, die unter den Komponenten des Trägermaterials ausgewählt werden, können gewünschtenfalls in geringen Mengentanteilen von üblicherweise nicht mehr als etwa 2 Gew.-% als Abpuderungskomponente auf das Schaumregulatorgranulat aufgebracht werden, unter Verminderung ihres entsprechenden Mengenanteils innerhalb des Granulats.

Eine erfindungsgemäß brauchbare Paraffinwachs enthaltende Schaumregulatoremulsion wird vorzugsweise durch Aufschmelzen des Paraffinwachses in Gegenwart des Emulgators, gegebenenfalls Abkühlen der Schmelze auf höchstens ca. 100 °C und Einrühren in Wasser hergestellt. Falls Mischungen aus nichtionischem Emulgator und anionischem Emulgator eingesetzt werden, ist es dabei bevorzugt, den nichtionischen Emulgator wie beschrieben in die Schmelze aus Paraffinwachs einzuarbeiten und den anionischen Emulgator nicht der Schmelze, sondern vor dem Einrühren der Schmelze dem Wasser zuzusetzen. Wenn man Paraffinwachs in geschmolzener, nicht abgekühlter Form einsetzt, ist es bevorzugt, kaltes Wasser mit einer höchstens Raumtemperatur entsprechenden Temperartur zu verwenden. Falls die Schmelze vor dem Einrühren in Wasser auf eine Temperatur von höchstens ca. 100 °C abgekühlt wird, ist es bevorzugt, Wasser mit einer Temperatur von ca. 50 °C bis 80 °C einzusetzen. Übliche Rührvorrichtungen sind normalerweise ausreichend, um die gleichmäßige Verteilung aller Komponenten zu erzielen und somit die erfindungsgemäß brauchbare wäßrige Emulsion zu erzeugen; der Einsatz von Hochgeschwindigkeitsmischern oder Homogenisatoren (zum Beispiel Ultra Turrax®) ist in der Regel nicht erforderlich. Die Einarbeitung von Silikonöl ist an jeder Stelle dieses Verfahrens möglich. Falls Schaumregulatoremulsionen hergestellt werden sollen, die Silikonöl in im Vergleich zur Menge des Paraffinwachses höherer Menge enthalten, vermischt man vorzugsweise zuerst das Silikonöl mit dem nichtionischen und/oder anionischen Emulgator, gibt unter Rühren einen Teil der Wassermenge so zu, daß eine Emulsion vom Typ Wasser in Silikon entsteht, gibt so lange weiteres Wasser zu, bis es zu einer Inversion der Emulsion kommt, rührt intensiv und gibt anschließend unter Rühren das restliche Wasser zu. Die so erhältliche Emulsion kann gegebenenfalls teilweise multiplen Charakter aufweisen, das heißt in der äußeren Wasserphase können sich auch Tröpfchen der ursprünglichen Kernemulsion vom Typ Wasser in Silikon befinden.

Die so erhältlichen, im erfindungsgemäßen Verfahren einsetzbaren Schaumregulatoremulsionen sind stabil und weisen bei 60 °C vorzugsweise Viskositäten unterhalb von 2500 mPa.s, insbesondere im Bereich von 100 mPa.s bis 500 mPa.s, gemessen beispielsweise mit einem Brookfield-Rotationsviskosimeter, Spindel Nr. 2, 5 Umdrehungen pro Minute, auf.

Bevorzugt ist, wenn in dem Organopolysiloxan (A) die Gruppe Ph eine Einheit ist, die mindestens 1 Benzolring -C₆R₅ enthält, worin jedes R unabhängig voneinander Wasserstoff, Halogen, Hydroxyl, eine Alkoxygruppe mit 1 bis 6 Kohlenstoffatomen oder eine monovalente Kohlenwasserstoffgruppe mit 1 bis 12 Kohlenstoffatomen bedeutet oder worin zwei oder mehr R-Gruppen zusammen eine divalente Kohlenwasserstoffgruppe darstellen. Die mittlere Anzahl von Siloxaneinheiten pro Molekül reicht vorzugsweise von 5 bis 5 000. Weiterhin bevorzugt ist, wenn in dem Organopolysiloxan (A) mindestens 50 % Diorganosiloxaneinheiten der Formel -SiYY'O- und bis zu 50 % Diorganosiloxaneinheiten der Formel -SiYXPhO- enthalten sind, wobei Y eine Alkylgruppe mit 1 bis 4 Kohlenstoffatomen und Y' eine aliphatische Kohlenwasserstoffgruppe mit 1 bis 24 Kohlenstoffatomen, insbesondere 1 bis 6 Kohlenstoffatomen ist. Vorzugsweise ist die Gruppe X eine Alkylengruppe mit 1 bis 24 Kohlenstoffatomen und Ph eine Phenylgruppe. Insbesondere bevorzugt ist die Gruppe -X-Ph 2-phenylpropyl. Das Organopolysiloxan (A) enthält vorzugsweise mindestens eine Vernetzungsstelle zwischen Siloxanpolymerketten, die der Formel -X'- oder -X'-Sx-X'- entspricht, worin X' eine divalente aliphatische organische Gruppe, die an Kohlenstoff über Silizium gebunden ist, und Sx eine Organosiloxangruppe ist.

Das Organosiliziumharz (B) ist vorzugsweise ein nichtlineares Silikon, das aus Siloxaneinheiten der Formel R'ₐSiO_{(4-a)/2} besteht, worin R' eine Hydroxyl-, Kohlenwasserstoff-oder Hydrocarbonoxygruppe bedeutet und a einen mittleren Wert von 0,5 bis 2,4 hat. Es besteht insbesondere aus monovalenten Trihydroxycarbonsiloxy-Gruppen der Formel R"SiO_{1/2} und tetrafunktionellen Gruppen SiO_{4/2} im Zahlenverhältnisbereich von 0,4:1 bis 1,1:1, wobei R" eine Alkylgruppe bedeutet. Es weist vorzugsweise eine mittlere Teilchengröße im Bereich von 2 µm bis 50 µm auf.

Der hydrophobe Füllstoff (C) wird vorzugsweise ausgewählt aus der Gruppe bestehend aus Kieselsäure, Titandioxid, gemahlenem Quarz, Aluminiumoxid, Aluminosilikaten, Polyethylenwachsen, mikrokristallinen Wachsen, Zinkoxid, Magnesiumoxid, Salzen aliphatischer Carbonsäuren, Cyclohexylamin, Alkylamiden, SiO₂ und deren Mischungen. Dabei ist pyrogenes oder gefälltes, insbesondere hydrophobiertes Siliciumdioxid mit einer Oberfläche von mindestens 50 m²/g besonders bevorzugt, wie es beispielsweise unter den Bezeichnungen Aerosil® oder Sipemat® im Handel erhältlich ist. Kieselsäuren weisen vorzugsweise eine mittlere Teilchengröße von 0,5 µm bis 30 µm auf.

Die Viskosität des Silikonöls liegt vorzugsweise im Bereich von 1 000 mPa.s bis 30 000 mPa.s, insbesondere von 1 500 mPa.s bis 3 000 mPa.s.

Die erfindungsgemäß in Frage kommenden Paraffinwachse sind im allgemeinen komplexe Stoffgemische ohne scharfen Schmelzpunkt. Zur Charakterisierung bestimmt man üblicherweise ihren Schmelzbereich durch Differential-Thermo-Analyse (DTA), wie in "The Analyst" 87 (1962), 420, beschrieben, und/oder ihren Erstarrungspunkt. Darunter versteht man die Temperatur, bei der das Wachs durch langsames Abkühlen aus dem flüssigen in den festen Zustand übergeht. Erfindungsgemäß sind sowohl bei Raumtemperatur vollständig flüssige Paraffine, das heißt solche mit einem Erstarrungspunkt unter 25 °C, als auch bei Raumtemperatur feste Paraffine brauchbar. Vorzugsweise ist das Paraffinwachs bei Raumtemperatur fest und liegt bei 100 °C in vollständig flüssiger Form vor. Eingesetzt werden können beispielsweise die aus der europäischen Patentanmeldung EP 0 309 931 bekannten Paraffinwachsgemische aus beispielsweise 26 Gew.-% bis 49 Gew.-% mikrokristallinem Paraffinwachs mit einem Erstarrungspunkt von 62 °C bis 90 °C, 20 Gew.-% bis 49 Gew.-% Hartparaffin mit einem Erstarrungspunkt von 42 °C bis 56 °C und 2 Gew.-% bis 25 Gew.-% Weichparaffin mit einem Erstarrungspunkt von 35 °C bis 40 °C. Vorzugsweise werden Paraffine beziehungsweise Paraffingemische verwendet, die im Bereich von 30 °C bis 90 °C erstarren. Dabei ist zu beachten, daß auch bei Raumtemperatur fest erscheinende Paraffinwachsgemische unterschiedliche Anteile an flüssigem Paraffin enthalten können. Bei den erfindungsgemäß brauchbaren Paraffinwachsen liegt der Flüssiganteil bei 40 °C möglichst hoch, ohne bei dieser Temperatur schon 100 % zu betragen. Bevorzugte Paraffinwachsgemische weisen bei 40 °C einen Flüssiganteil von mindestens 50 Gew.-%, insbesondere von 55 Gew.-% bis 80 Gew.-%, und bei 60 °C einen Flüssiganteil von mindestens 90 Gew.-% auf. Die Temperatur, bei der ein Flüssiganteil von 100 Gew.-% des Paraffinwachses erreicht wird, liegt bei besonders bevorzugten Paraffinwachsgemischen noch unter 85 °C, insbesondere bei 75 °C bis 82 °C. Außerdem ist darauf zu achten, daß die Paraffine möglichst keine flüchtigen Anteile enthalten. Bevorzugte Paraffinwachse enthalten weniger als 1 Gew.-%, insbesondere weniger als 0,5 Gew.-% bei 110 °C und Normaldruck verdampfbare Anteile. Erfindungsgemäß brauchbare Paraffinwachse können beispielsweise unter den Handelsbezeichnungen Lunaflex® der Firma Fuller sowie Deawax® der DEA Mineralöl AG bezogen werden.

In einer Ausführungsform der Erfindung wird Silikonöl in Mischungen aus Paraffinwachs und Silikonöl vorzugsweise in solchen Mengen eingesetzt, daß die im erfindungsgemäßen Verfahren verwendete Schaumregulatoremulsion einen Gehalt an Silikonöl im Bereich von 0,1 Gew.% bis 10 Gew.-%, insbesondere 1 Gew.-% bis 5 Gew.-% aufweist. In einer weiteren bevorzugten Ausgestaltung enthält die auf das Trägermaterial aufzusprühende Schaumregulatoremulsion eine Mischung aus Paraffinwachs und Silikonöl im Gewichtsverhältnis 11:1 bis 1,8:1, insbesondere 5:1 bis 2:1.

Eine besonders bevorzugt eingesetzte Schaumregulatoremulsion enthält 5 Gew.-% bis 40 Gew.-%, insbesondere 10 Gew.-% bis 35 Gew.-% Silikonöl, 1 Gew.-% bis 10 Gew.-%, insbesondere 2 Gew.-% bis 5 Gew.-% Paraffinwachs und 50 Gew.-% bis 94 Gew.-% Wasser.

Das Paraffinwachs kann gewünschtenfalls in Abmischung mit sich von C₂₋₇-Diaminen und C₁₂₋₂₂-Fettsäuren ableitendem Bisfettsäureamid vorliegen. Dann liegt das Gewichtsverhältnis von Paraffinwachs zu Bisfettsäureamid vorzugsweise im Bereich von 50:1 bis 1:1, insbesondere von 10:1 bis 5:1. Die Bisamide leiten sich vorzugsweise von gesättigten Fettsäuren mit 12 bis 22, insbesondere 14 bis 18 C-Atomen sowie von Alkylendiaminen mit 2 bis 7 C-Atomen ab. Geeignete Fettsäuren sind zum Beispiel Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind. Geeignete Diamine sind beispielsweise Ethylendiamin 1,3-Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bisamide sind Bis-myristoyl-ethylendiamin, Bis-palmitoyl-ethylendiamin, Bis-stearoyl-ethylendiamin und deren Gemische sowie die entsprechenden Derivate des Hexamethylendiamins. Die Bisamide liegen vorzugsweise in feinverteilter Form vor und weisen insbesondere eine mittlere Korngröße von weniger als 50 µm auf. Vorzugsweise liegt die maximale Korngröße der Partikel unter 20 µm, wobei mindestens 50 %, insbesondere mindestens 75 % der Partikel kleiner als 10 µm sind. Diese Angaben hinsichtlich der Partikelgröße beziehen sich auf die bekannte Bestimmungsmethode mit dem "Coulter Counter".

Unter nichtionischen Emulgatoren, die in erfindungsgemäß brauchbaren Emulsionen zum Einsatz kommen können, werden insbesondere die Alkoxylate, vorzugsweise die Ethoxylate und/oder Propoxylate von Alkoholen, Alkylaminen, vicinalen Diolen, Carbonsäuren und/oder Carbonsäureamiden, die Alkylgruppen mit 8 bis 22 C-Atomen, vorzugsweise 12 bis 18 C-Atomen, besitzen, verstanden. Der mittlere Alkoxylierungsgrad dieser Verbindungen beträgt dabei in der Regel von 1 bis 10, vorzugsweise 2 bis 5. Sie können in bekannter Weise durch Umsetzung mit den entsprechenden Alkylenoxiden hergestellt werden. Auch Produkte, die durch Alkoxylierung von Fettsäurealkylestern mit 1 bis 4 C-Atomen im Esterteil nach dem Verfahren der internationalen Patentanmeldung WO 90/13533 herstellbar sind, kommen in Frage. Zu den in Frage kommenden Alkoholalkoxylaten gehören die Ethoxylate und/oder Propoxylate von linearen oder verzweigtkettigen Alkoholen mit 8 bis 22 C-Atomen, vorzugsweise 12 bis 18 C-Atomen. Geeignet sind insbesondere die Derivate der Fettalkohole, obwohl auch deren verzweigtkettige Isomere zur Herstellung verwendbarer Alkoxylate eingesetzt werden können. Brauchbar sind demgemäß insbesondere die Ethoxylate primärer Alkohole mit linearen Dodecyl-, Tetradecyl-, Hexadecyl- oder Octadecylresten sowie deren Gemische. Auch der Einsatz entsprechender Alkoxylate von ein- oder mehrfach ungesättigten Fettalkoholen, zu denen beispielsweise Oleylalkohol, Elaidylalkohol, Linoleylalkohol, Linolenylalkohol, Gadoleylalkohol und Erucaalkohol gehört, ist möglich. Auch Ester beziehungsweise Partialester von Carbonsäuren entsprechender C-Kettenlänge mit Polyolen wie Glycerin oder Oligoglycerin können eingesetzt werden. Bevorzugte anionische Emulgatoren sind Alkalisalze der Alkylbenzolsulfonsäuren mit 9 bis 13 C-Atomen in der Alkylgruppe, insbesondere Natriumdodecylbenzolsulfonat. Zusätzlich zu derartigen Emulgatoren können geringe Mengen, gegebenenfalls bis zu 4 Gew.-%, anionischer und/oder nichtionischer Celluloseether wie Carboxymethylcellulose und/oder Hydroxyethylcellulose, enthalten sein.

Wesentlich zur Herstellung erfindungsgemäß brauchbarer Emulsionen ist, daß man eine homogene Mischung aus Schaumregulatorsystem und insbesondere nichtionischem Emulgator einsetzt. Diese kann man vorteilhaft in einfacher Weise durch Aufschmelzen des bei Raumtemperatur festen Paraffins in Gegenwart des Silikonöls und des Emulgators, zweckmäßigerweise unter Rühren beziehungsweise Homogenisieren, erreichen. Anschließend an die vorzugsweise bei Temperaturen im Bereich von 60 °C bis 150 °C, insbesondere 80 °C bis 150 °C vorgenommene Bildung des Gemisches aus Entschäumersystem und Emulgator wird dieses, gegebenenfalls nach Abkühlen, mit dem Wasser vermischt, wobei dem Wasser zuvor ein insbesondere anionischer Emulgator zugesetzt worden sein kann. In diesem Fall beträgt die Konzentration an anionischem Emulgator in Wasser vorzugsweise 5 Gew.-% bis 15 Gew.-%.

Die so erhältliche Emulsion ist bei Raumtemperatur lagerstabil und man bringt vorzugsweise 3 Gew.-% bis 60 Gew.-%, insbesondere 15 Gew.-% bis 45 Gew.-% an ihr auf das Trägermaterial auf. Nach dem Aufbringen der wäßrigen Emulsion kann ein Trocknungsschritt, beispielweise unter Verwendung üblicher Wirbelschichttrockner, angeschlossen werden, oder man bringt die Emulsion unter gleichzeitiger Trocknung, zum Beispiel ebenfalls in einer Wirbelschicht, auf. Die erfindungsgemäßen beziehungsweise nach dem erfindungsgemäßen Verfahren erhältlichen Schaumregulatorgranulate enthalten vorzugsweise 5 Gew.-% bis 50 Gew.-%, insbesondere 8 Gew.-% bis 35 Gew.-% Schaumregulatorwirkstoff.

Ein erfindungsgemäßes Schaumregulatorgranulat weist ein gutes schaumdämpfendes Verhalten auf, wenn man es in ansonsten üblich zusammengesetzte Wasch- und Reinigungsmittel einarbeitet und diese in üblichen manuellen oder insbesondere maschinellen Wasch- beziehungsweise Reinigungsverfahren einsetzt. Besonders auffällig positive Leistungen ergeben sich, wenn es in Mittel eingearbeitet wird, die verzweigtkettige Tenside enthalten.

Ein weiterer Gegenstand der Erfindung ist daher die Verwendung eines erfindungsgemäßen Schaumregulatorgranulats zur Schaumregulierung von Wasch- oder Reinigungsmitteln umfassend mittelkettig verzweigtes nichtionisches Tensid der allgemeinen Formel I,

R¹-O-(CH₂CH₂O)ₚ-H (I),

in der R¹ ein mittelkettig verzweigter Alkyl- oder Alkenylrest mit 10 bis 22 Kohlenstoffatomen ist und einen mittleren Verzweigungsgrad von 0,25 bis 2,8, insbesondere von 1,2 bis 2,5 aufweist und p für Zahlen von 1 bis 9 steht. Der Verzweigungsgrad definiert sich über die Zahl der primären Kohlenstoffatome.

Vorzugsweise umfasst das Wasch- oder Reinigungsmittel ein mittelkettig verzweigtes nichtionisches Tensid der allgemeinen Formel I, in der R¹ ein mittelkettig verzweigter Alkyl- und/oder Alkenylrest mit 8 bis 18, insbesondere mit 13 Kohlenstoffatomen ist und einen mittleren Verzweigungsgrad von 1,7 bis 2,4 aufweist und p für Zahlen von 3 bis 7 steht. In den Wasch- oder Reinigungsmitteln werden vorzugsweise mittelkettig verzweigte nichtionische Tenside mit einem Alkyl- und/oder Alkenylrest R¹, in welchem die Verzweigung in der Anwesenheit von zumindest überwiegend Methyl-, Ethyl-, Propyl- und/oder Butylgruppen besteht, wobei besonders bevorzugt Methyl und/oder Ethylverzweigungen sind, eingesetzt. Die mittelkettig verzweigten nichtionischen Tenside können aber auch längere Alkylverzweigungen aufweisen.

In einer bevorzugten Ausführungsform sind in dem Wasch- oder Reinigungsmittel von 0,1 Gew.-% bis 30 Gew.-%, insbesondere von 0,5 Gew.-% bis 20 Gew.-% und besonders bevorzugt von 1 Gew.% bis 15 Gew.-% an mittelkettig verzweigtem nichtionischen Tensid enthalten.

Geeignete Alkoholethoxylate, die der Formel I entsprechen, umfassen beispielsweise Lutensol®, kommerziell erhältlich von BASF AG, Ludwigshafen, sowie Marlipal® und Safol®, kommerziell erhältlich von Sasol Germany. Insbesondere geeignet sind beispielsweise nichtionische Tenside, welche unter der Bezeichnung Lutensol® TO, Lutensol® AO, Marlipal® 013 oder Marlipal® 035 angeboten werden.

In einem Wasch- oder Reinigungsmittel, in dem das erfindungsgemäße Schaumregulatorgranulat zum Einsatz kommt, sind vorzugsweise zusätzlich zu dem nichtionischenTensid auch mittelkettig verzweigte Alkylsulfate und/oder Alkylsulfonate enthalten, ausgewählt aus der Gruppe umfassend Alkylsulfate und/oder Alkylsulfonate mit einem mittelkettig verzweigten Alkylrest mit 10 bis 22, insbesondere 8 bis 18 und insbesondere bevorzugt mit 13 Kohlenstoffatomen und einem mittleren Verzweigungsgrad von 1,7 bis 2,4.

Die mit Hilfe des erfindungsgemäßen Schaumregulatorgranulats in ihrem Schäumvermögen kontrollierbaren Wasch- und Reinigungsmittel können alle in diesen Mitteln sonst üblicherweise enthaltenen Inhaltstoffe aufweisen, wie beispielsweise Builder, sonstige Tenside, Bleichmittel, Enzyme, Farb- und Duftstoffe.

### Beispiel 1

Im wesentlichen wie in WO 02/074894 beschrieben wurde ein Granulat D1 mit folgender Rezeptur (jeweils Gew.-%) hergestellt:
Rezeptur D1
   0,98 Alkylbenzolsulfanat (Na-salz)
   1,45 Fettalkohol C12-C14 + 3 EO
   5,87 Hydroxypropan-1,2,3-tricarbonsäure 1 H2O
   11,4 Paraffin
   1,74 Bis(stearoyl)ethylendiamin
   65,4 Natriumcarbonat
   1,96 Polyacrylsäure-Na-Salz
   3,19 Silikonöl*
   Rest auf 100 Wasser
*Silikonöl-Compound gemäß EP 1075864

Zum Vergleich wurde das im Beispiel der WO 02/074894 offenbarte Entschäumergranulat (hier E1) verwendet; dazu wurden 306 Gew.-Teile einer gemäß WO 00/36063 erhaltenen Schaumregulatoremulsion, enthaltend 40 Gew.-% Paraffinwachs mit einem Erstanungspunkt nach DIN ISO 2207 von 45 °C und einem Flüssiganteil bei 40 °C von ca. 66 Gew.-% und bei 60 °C von ca. 96 % (Lunaflex®, Hersteller DEA), 6 Gew.-% Bistearylsäureethylendiamid, 4,5 Gew.-% Silikonöl, 5,5 Gew.% anionischen (Na-Dodecylbenzolsulfonat) und 5 Gew.% nichtionischen (3-flach ethoxylierter C_{12/14}-Fettalkohol, Hersteller Cognis Deutschland GmbH) Emulgator, Rest Wasser, in einem Mischer auf die darin vorgelegte Kombination aus Natriumcarbonat (704 Gew.-Teile) und Citronensäure (63 Gew.-Teile), die man zuvor mit 30 Gew.-Teilen Wasser versetzt hatte, aufgebracht, wobei sich ein Granulat bildete; dieses wurde anschließend in einem Wirbelschichttrockner bei 80 - 90 °C getrocknet.

Die Entschäumergranulate wurden entschäumerwirkstoffgewichtsgleich in einem Pulverwaschmittel basierend auf einem verzweigtem Alkoholethoxylat (Marlipal(R) O35/60 - Isotridecanolethoxylat 6EO) eingesetzt und in einer Waschmaschine Typ Miele W 918 bei 30°C / 40°C / 60°C und 90°C auf Schaumverhalten untersucht. Ermittelt wurde die während des 60 minütigen Waschganges resultierenden Schaumnoten (0 = kein Schaum; 2 = Halber Trommelfüllstand enthält Schaum; 4 = Trommel komplett mit Schaum gefüllt) als Funktion der Meßzeit (als Mittelwert über den gesamten Waschgang).

### Schaumnoten:

| | 30°C | 40°C | 60°C | 95°C |
|---|---|---|---|---|
| D1 | 1,67 | 1,17 | 0,2 | 0 |
| E1 | 2,10 | 2,67 | 2,80 | 2,97 |

### Beispiel 2

Gemäß der in Beispiel 1 beschriebenen Meßmethode wurde das Entschäumungsverhalten in einem Pulverwaschmittel enthaltend eine Mischung aus kationischern (C_{12/14}-Alkyl dimethyl hydroxyethyl ammoniumchlorid) und anionischem Tensid (Lineares Alkylbenzolsulfonat) getestet.

### Schaumnoten:

| | 30°C | 40°C | 60°C | 95°C |
|---|---|---|---|---|
| E1 | 1,20 | 1,40 | 3,47 | 3,40 |
| D1 | 1,60 | 1,07 | 1,97 | 0,67 |

## Patentansprüche

1. Teilchenförmiges Schaumregulatorgranulat, erhältlich durch Aufbringen einer wäßrigen Schaumregulatoremulsion, die 16 Gew.-% bis 70 Gew.-% Schaumregulatorwirkstoff auf Basis einer Kombination aus Paraffinwachs und Silikon, 2 Gew.-% bis 15 Gew.-% nichtionischen und/oder anionischen Emulgator sowie nicht mehr als 80 Gew.-% Wasser enthält, auf ein festes Trägermaterial, woran sich gegebenenfalls ein Trocknungsschritt anschließt, **dadurch gekennzeichnet, daß** das Silikon enthält (A) Organopolysiloxan mit mindestens einem siliziumgebundenen Substituenten der Formel X-Ph, worin X eine divalente organische Gruppe, die über ein Kohlenstoffatom an Silizium gebunden ist, und Ph eine aromatische Gruppe bedeutet, (B) ein Organosiliziumharz und (C) einen hydrophoben Füllstoff, und daß das Trägermaterial Alkalicarbonat und eine Brønsted-Säure enthält.

2. Schaumregulatorgranulat nach Anspruch 1, **dadurch gekennzeichnet, daß** die Brønsted-Säure bei 25 °C in fester Form vorliegt.

3. Schaumregulatorgranulat nach Anspruch 1 oder 2, **dadurch gekennzeichnet, daß** die Brønsted-Säure bei 25 °C eine Wasserlöslichkeit von mindestens 100 g/l aufweist.

4. Schaumregulatorgranulat nach einem der Ansprüche 1 bis 3, **dadurch gekennzeichnet, daß** die Brønsted-Säure aus den Di- und Tricarbonsäuren, deren sauren Salzen, den sauren Salzen von anorganischen Säuren, insbesondere NaHSO₄, Na₂HPO₄ und NaH₂PO₄, und deren Mischungen ausgewählt wird.

5. Schaumregulatorgranulat nach einem der Ansprüche 1 bis 4, **dadurch gekennzeichnet, daß** das Trägermaterial Alkalicarbonat und eine Brønsted-Säure in Gewichtsverhältnissen von 1:1 1 bis 100:1, insbesondere von 20:3 bis 80:3 enthält.

6. Schaumregulatorgranulat nach einem der Ansprüche 1 bis 5, **dadurch gekennzeichnet, daß** das Trägermaterial 40 Gew.-% bis 90 Gew.-%, insbesondere 60 Gew.-% bis 80 Gew.-% Alkalicarbonat und 0,5 Gew.-% bis 20 Gew.-%, insbesondere 1 Gew.-% bis 9 Gew.-% einer Brønsted-Säure aufweist.

7. Schaumregulatorgranulat nach einem der Ansprüche 1 bis 6, **dadurch gekennzeichnet, daß** in dem Organopolysiloxan (A) die Gruppe Ph eine Einheit ist, die mindestens 1 Benzolring -C₆R₅ enthält, worin jedes R unanhängig voneinander Wasserstoff, Halogen, Hydroxyl, eine Alkoxygruppe mit 1 bis 6 Kohlenstoffatomen oder eine monovalente Kohlenwasserstoffgruppe mit 1 bis 12 Kohlenstoffatomen bedeutet oder worin zwei oder mehr R-Gruppen zusammen eine divalente Kohlenwasserstoffgruppe darstellen.

8. Schaumregulatorgranulat nach einem der Ansprüche 1 bis 7, **dadurch gekennzeichnet, daß** in dem Organopolysiloxan (A) die mittlere Anzahl von Siloxaneinheiten pro Molekül von 5 bis 5 000 reicht.

9. Schaumregulatorgranulat nach einem der Ansprüche 1 bis 8, **dadurch gekennzeichnet, daß** in dem Organopolysiloxan (A) mindestens 50 % Diorganosiloxaneinheiten der Formel -SiYY'O- und bis zu 50 % Diorganosiloxaneinheiten der Formel -SiYXPhOenthalten sind, wobei Y eine Alkylgruppe mit 1 bis 4 Kohlenstoffatomen und Y' eine aliphatische Kohlenwasserstoffgruppe mit 1 bis 24 Kohlenstoffatomen, insbesondere 1 bis 6 Kohlenstoffatomen ist.

10. Schaumregulatorgranulat nach einem der Ansprüche 1 bis 9, **dadurch gekennzeichnet, daß** in dem Organopolysiloxan (A) die Gruppe X eine Alkylengruppe mit 1 bis 24 Kohlenstoffatomen und Ph eine Phenylgruppe ist.

11. Schaumregulatorgranulat nach einem der Ansprüche 1 bis 10, **dadurch gekennzeichnet, daß** in dem Organopolysiloxan (A) die Gruppe -X-Ph 2-Phenylpropyl ist.

12. Schaumregulatorgranulat nach einem der Ansprüche 1 bis 11, **dadurch gekennzeichnet, daß** das Organopolysiloxan (A) mindestens eine Vernetzungsstelle zwischen Siloxanpolymerketten enthält, die der Formel -X'- oder -X'-Sx-X'- entspricht, worin X' eine divalente aliphatische organische Gruppe, die an Kohlenstoff über Silizium gebunden ist, und Sx eine Organosiloxangruppe ist.

13. Schaumregulatorgranulat nach einem der Ansprüche 1 bis 12, **dadurch gekennzeichnet, daß** das Organosiliziumharz (B) ein nichtlineares Silikon ist, das aus Siloxaneinheiten der Formel R'ₐSiO_{(4-a)/2} besteht, worin R' eine Hydroxyl-, Kohlenwasserstoff- oder Hydrocarbonoxygruppe bedeutet und a einen mittleren Wert von 0,5 bis 2,4 hat.

14. Schaumregulatorgranulat nach einem der Ansprüche 1 bis 13, **dadurch gekennzeichnet, daß** das Organosiliziumharz (B) ein Siloxanharz ist, das aus monovalenten Trihydroxycarbonsiloxy-Gruppen der Formel R"SiO_{1/2} und tetrafunktionellen Gruppen SiO_{4/2} im Zahlenverhältnisbereich von 0,4:1 bis 1,1:1 1 besteht, wobei R" eine Alkylgruppe bedeutet.

15. Schaumregulatorgranulat nach einem der Ansprüche 1 bis 14, **dadurch gekennzeichnet, daß** das Organosiliziumharz (B) eine mittlere Teilchengröße im Bereich von 2 µm bis 50 µm aufweist.

16. Schaumregulatorgranulat nach einem der Ansprüche 1 bis 15, **dadurch gekennzeichnet, daß** der hydrophobe Füllstoff (C) ausgewählt ist aus der Gruppe bestehend aus Kieselsäure, Titandioxid, gemahlenem Quarz, Aluminiumoxid, Aluminosilikaten, Polyethylenwachsen, mikrokristallinen Wachsen, Zinkoxid, Magnesiumoxid, Salzen aliphatischer Carbonsäuren, Cyclohexylamin, Alkylamiden, SiO₂ und deren Mischungen.

17. Schaumregulatorgranulat nach einem der Ansprüche 1 bis 16, **dadurch gekennzeichnet, daß** der hydrophobe Füllstoff (C) eine Kieselsäure mit einer mittleren Teilchengröße von 0,5 µm bis 30 µm ist.

18. Schaumregulatorgranulat nach einem der Ansprüche 1 bis 17, **dadurch gekennzeichnet, daß** das schaumregulierende Paraffinwachs bei Raumtemperatur fest ist und bei 100 °C in vollständig flüssiger Form vorliegt.

19. Schaumregulatorgranulat nach einem der Ansprüche 1 bis 18, **dadurch gekennzeichnet, daß** das Paraffinwachs bei 40 °C einen Flüssiganteil von mindestens 50 Gew.-%, insbesondere von 55 Gew.% bis 80 Gew.-%, und bei 60 °C einen Flüssiganteil von mindestens 90 Gew.-% aufweist.

20. Schauinregulatorgranulat nach einem der Ansprüche 1 bis 19, **dadurch gekennzeichnet, daß** das Paraffinwachs in Abmischung mit sich von C₂₋₇-Diaminen und C₁₂₋₂₂-Fettsäuren ableitendem Bisfettsäureamid vorliegt.

21. Schaumregulatorgranulat nach Anspruch 20, **dadurch gekennzeichnet, daß** das Gewichtsverhältnis von Paraffinwachs zu Bisfettsäureamid im Bereich von 50:1 bis 1:1, insbesondere von 10:1 1 bis 5:1 1 liegt.

22. Verwendung eines Schaumregulatorgranulats nach einem der Ansprüche 1 bis 21 zur Schaumregulierung von Wasch- oder Reinigungsmitteln umfassend mittelkettig verzweigtes nichtionisches Tensid der allgemeinen Formel I,
R¹-O-(CH₂CH₂O)ₚ-H (I),
in der R¹ ein mittelkettig verzweigter Alkyl- oder Alkenylrest mit 10 bis 22 Kohlenstoffatomen ist und einen mittleren Verzweigungsgrad von 0,25 bis 2,8, insbesondere von 1,2 bis 2,5 aufweist und p für Zahlen von 1 bis 9 steht.

23. Verwendung nach Anspruch 22, **dadurch gekennzeichnet, daß** das Wasch- oder Reinigungsmittel ein mittelkettig verzweigtes nichtionisches Tensid der allgemeinen Formel I umfasst, in der R¹ ein mittelkettig verzweigter Alkyl- und/oder Alkenylrest mit 8 bis 18, insbesondere mit 13 Kohlenstoffatomen ist und einen mittleren Verzweigungsgrad von 1,7 bis 2,4 aufweist und p für Zahlen von 3 bis 7 steht.

24. Verwendung nach Anspruch 22 oder 23, **dadurch gekennzeichnet, daß** in dem Wasch-oder Reinigungsmittel von 0,1 Gew.% bis 30 Gew.-%, insbesondere von 0,5 Gew.-% bis 20 Gew.-% und besonders bevorzugt von 1 Gew.-% bis 15 Gew.-% an mittelkettig verzweigtem nichtionischen Tensid enthalten sind.

25. Verwendung nach einem der Ansprüche 22 bis 24, **dadurch gekennzeichnet, daß** in dem Wasch- oder Reinigungsmittel mittelkettig verzweigte Alkylsulfate und/oder Alkylsulfonate enthalten sind, ausgewählt aus der Gruppe umfassend Alkylsulfate und/oder Alkylsulfonate mit einem mittelkettig verzweigten Alkylrest mit 10 bis 22, insbesondere 8 bis 18 und insbesondere bevorzugt mit 13 Kohlenstoffatomen und einem mittleren Verzweigungsgrad von 1,7 bis 2,4.

26. Verfahren zur Herstellung eines Schaumregulatorgranulats gemäß einem der Ansprüche 1 bis 21, **dadurch gekennzeichnet, daß** man eine wäßrige Schaumregulatoremulsion, enthaltend 16 Gew.-% bis 70 Gew.-% des Schaumregulatorwirkstoffs auf Basis von Paraffinwachs und Silikon, 2 Gew.-% bis 15 Gew.-% nichtionischen und/oder anionischen Emulgator sowie nicht mehr als 80 Gew.-% Wasser, auf das teilchenförmige Trägermaterial aufbringt.

27. Verfahren nach Anspruch 26, **dadurch gekennzeichnet, daß** die wäßrige Schaumregulatoremulsion eine Mischung aus Paraffinwachs und Silikon im Gewichtsverhältnis 11:1 1 bis 1,8:1, insbesondere 5:1 bis 2:1, enthält.

28. Verfahren nach Anspruch 26 oder 27, **dadurch gekennzeichnet, daß** man in einem Granulationsmischer eine Aufbaugranulation derart durchführt, daß man eine Menge von 40 bis 110 Gewichtsteilen, insbesondere 60 bis 90 Gewichtsteilen an Trägermaterial intensiv mischt und unter Granulieren eine Menge von 15 bis 50 Gewichtsteilen, insbesondere 25 bis 35 Gewichtsteilen der gegebenenfalls auf eine Temperatur im Bereich von 70 °C bis 180 °C erwärmten Schaumregulatoremulsion zusetzt.

## Claims

1. A particulate foam regulator granulate, which may be obtained by applying an aqueous foam regulator emulsion, which contains 16% by weight to 70% by weight of a foam regulator active material based on a combination of paraffin wax and silicone, 2% by weight to 15% by weight of a non-ionic and/or anionic emulsifier as well as not more than 80% by weight of water, onto a solid carrier material, optionally followed by a drying step, **characterized in that** the silicone contains (A) an organopolysiloxane with at least one silicon-bound substituent of formula X-Ph, wherein X is a divalent organic group, which is bound to silicon via a carbon atom and Ph designates an aromatic group, (B) an organosilicon resin and (C) a hydrophobic filler, and that the carrier material contains an alkali metal carbonate and a Bronsted acid.

2. The foam regulator granulate according to claim 1, **characterized in that** the Brønsted acid exists as a solid at 25°C.

3. The foam regulator granulate according to claim 1 or 2, **characterized in that** the Brønsted acid has water solubility of at least 100 g/L at 25°C.

4. The foam regulator granulate according to one of claims 1 to 3, **characterized in that** the Brønsted acid is selected from di- and tri-carboxylic acids, their acid salts, acid salts of inorganic acids, in particular NaHSO₄, Na₂HPO₄ and NaH₂PO₄, and mixtures thereof.

5. The foam regulator granulate according to one of claims 1 to 4, **characterized in that** the carrier material contains an alkali metal carbonate and a Brønsted acid in weight ratios from 1:1 to 100:1, in particular, from 20:3 to 80:3.

6. The foam regulator granulate according to one of claims 1 to 5, **characterized in that** the carrier material has 40% by weight to 90% by weight, in particular 60% by weight to 80% by weight of an alkali metal carbonate and 0.5% by weight to 20% by weight, in particular 1% by weight 9% by weight of a Bronsted acid.

7. The foam regulator granulate according to one of claims 1 to 6, **characterized in that** in the organopolysiloxane (A), the group Ph is a unit which contains at least one benzene ring -C₆R₅, wherein each R represents independently of each other a hydrogen, a halogen, a hydroxyl, an alkoxy group with 1 to 6 carbon atoms, or a monovalent hydrocarbon group with 1 to 12 carbon atoms, or wherein two or more R groups represent together a divalent hydrocarbon group.

8. The foam regulator granulate according to one of claims 1 to 7, **characterized in that** the average number of siloxane units per molecule attains 5 to 5,000 in the organopolysiloxane (A).

9. The foam regulator granulate according to one of claims 1 to 8, **characterized in that** at least 50% of the di-organosiloxane units of formula -SiYY'O- and up to 50% of the di-organosiloxane units of formula -SiYXPhO- are contained in the organopolysiloxane (A), wherein Y is an alkyl group with 1 to 4 carbon atoms and Y' is an aliphatic hydrocarbon group with 1 to 24 carbon atoms, in particular 1 to 6 carbon atoms.

10. The foam regulator granulate according to one of claims 1 to 9, **characterized in that**, in the organopolysiloxane (A), the group X is an alkylene group with 1 to 24 carbon atoms and Ph is a phenyl group.

11. The foam regulator granulate according to one of claims 1 to 10, **characterized in that**, in the organopolysiloxane (A), the -X-Ph group is 2-phenylpropyl.

12. The foam regulator granulate according to one of claims 1 to 11, **characterized in that** the organopolysiloxane (A) contains at least one cross-linking position between siloxane polymer chains, which corresponds to the formulae -X'- or -X'-Sx-X'-, wherein X' is a divalent aliphatic organic group, which is bound to carbon via silicon, and Sx is an organosiloxane group.

13. The foam regulator granulate according to one of claims 1 to 12, **characterized in that** the organosilicon resin (B) is a non-linear silicone, which consists of siloxane units of formula R'ₐSiO_{(4-a)/2}, wherein R' designates a hydroxyl, hydrocarbon or hydrocarbonoxy group and a has an average value from 0.5 to 2.4.

14. The foam regulator granulate according to one of claims 1 to 13, **characterized in that** the organosilicon resin (B) is a siloxane resin, which consists of: monovalent trihydroxycarbonsiloxy groups of formula R"SiO_{1/2} and tetrafunctional groups SiO_{4/2} in a number ratio range from 0.4:1 to 1.1:1, wherein R" designates an alkyl group.

15. The foam regulator granulate according to one of claims 1 to 14, **characterized in that** the organosilicon resin (B) has an average particle size in the range from 2 µm to 50 µm.

16. The foam regulator granulate according to one of claims 1 to 15, **characterized in that** the hydrophobic filler (C) is selected from the group consisting of silicic acid, titanium dioxide, ground quartz, aluminium oxide, aluminosilicates, polyethylene waxes, microcrystalline waxes, zinc oxide, magnesium oxide, salts of aliphatic carboxylic acids, cyclohexylamine, alkylamides, SiO₂, and mixtures thereof.

17. The foam regulator granulate according to one of claims 1 to 16, **characterized in that** the hydrophobic filler (C) is silicic acid with an average particle size from 0.5 µm to 30 µm.

18. The foam regulator granulate according to one of claims 1 to 17, **characterized in that** the foam regulator paraffin wax is solid at room temperature and exists in completely liquid form at 100°C.

19. The foam regulator granulate according to one of claims 1 to 18, **characterized in that** the paraffin wax at 40°C has a liquid portion of at least 50% by weight, in particular, from 55% by weight to 80% by weight, and at 60°C, a liquid portion of at least 90% by weight.

20. The foam regulator granulate according to one of claims 1 to 19, **characterized in that** the paraffin wax exists in a mixture with a fatty acid diamide derived from C₂-C₇ diamines and C₁₂-C₂₂ fatty acids.

21. The foam regulator granulate according to claim 20, **characterized in that** the mass ratio of paraffin wax to fatty acid diamide is in the range from 50:1 to 1:1, in particular from 10:1 to 5:1.

22. The use of a foam regulator granulate according to one of claims 1 to 21, for regulating foam of washing and cleaning agents comprising a medium-chain branched non-ionic surfactant of general formula I,
R¹-O-(CH₂CH₂O)ₚ-H (I),
wherein R¹ is a medium-chain branched alkyl or alkenyl radical with 10 to 22 carbon atoms and has an average degree of branching from 0.25 to 2.8, in particular from 1.2 to 2.5 and p represents a number from 1 to 9.

23. The use according to claim 22, **characterized in that** the washing and cleaning agent comprises a medium-chain branched non-ionic surfactant of general formula I, wherein R¹ is a medium-chain branched alkyl or alkenyl radical with 8 to 18 carbon atoms, in particular with 13 carbon atoms and has an average degree of branching from 1.7 to 2.4 and p represents a number from 3 to 7.

24. The use according to claim 22 or 23, **characterized in that** from 0.1 % by weight to 30% by weight, in particular, from 0.5% by weight to 20% by weight, and more preferably from 1% by weight to 15% by weight of medium-chain branched non-ionic surfactant are contained in the washing or cleaning agent.

25. The use according to one of claims 22 to 24, **characterized in that** medium-chain branched alkyl sulfates and/or alkyl sulfonates are contained in the washing or cleaning agent, selected from the group comprising alkyl sulfates and/or alkyl sulfonates, with a medium-chain branched alkyl radical with 10 to 22, in particular 8 to 18, and more preferably with 13 carbon atoms, and an average degree of branching from 1.7 to 2.4.

26. A method for preparing a foam regulator granulate according to one of claims 1 to 21, **characterized in that** an aqueous foam regulator emulsion, containing 16% by weight to 70% by weight of a foam regulator active substance based on paraffin wax and silicone, 2% by weight to 15% by weight of non-ionic and/or anionic emulsifier as well as not more than 80% by weight of water, is applied on the particulate carrier material.

27. The method according to claim 26, **characterized in that** the aqueous foam regulator emulsion contains a mixture of paraffin wax and silicone in a weight ratio from 11:1 to 1.8:1, in particular 5:1 to 2:1.

28. The method according to claim 26 or 27, **characterized in that** the formation of granules is carried out in a granulation mixer so that an amount of 40 to 10 parts per weight, in particular 60 to 90 parts per weight of carrier material is intensively mixed, and an amount of 15 to 50 parts per weight, in particular, 25 to 35 parts per weight of the foam regulator emulsion, optionally heated to a temperature in the range from 70°C to 180°C, is added with granulation.

## Revendications

1. Granulé particulaire régulateur de mousse, que l'on obtient par l'application d'une émulsion aqueuse régulatrice de mousse, qui contient de 16 % en poids à 70 % en poids d'une substance active régulatrice de mousse à base d'une combinaison de cire de paraffine et de silicone, de 2 % en poids à 15 % en poids d'un émulsifiant non ionique et/ou anionique, et de l'eau en une quantité qui n'est pas supérieure à 80 % en poids, sur une matière de support solide, application à laquelle se raccorde directement si on le souhaite une étape de séchage, **caractérisé en ce que** le silicone contient (A) un organopolysiloxane contenant au moins un substituant lié à un atome de silicium, répondant à la formule X-Ph, dans laquelle X représente un groupe organique divalent qui est lié à un atome de silicium via un atome de carbone, et Ph désigne un groupe aromatique, (B) une résine à base d'organosilicium et (C) une matière de charge hydrophobe, et **en ce que** la matière de support contient un carbonate de métal alcalin et un acide de Bronsted.

2. Granulé régulateur de mousse selon la revendication 1, **caractérisé en ce que** l'acide de Bronsted est présent sous forme solide à 25 °C.

3. Granulé régulateur de mousse selon la revendication 1 ou 2, **caractérisé en ce que** l'acide de Bronsted présente, à 25 °C, une solubilité dans l'eau s'élevant à au moins 100 g/l.

4. Granulé régulateur de mousse selon l'une quelconque des revendications 1 à 3, **caractérisé en ce que** l'acide de Bronsted est choisi parmi des acides dicarboxyliques et tricarboxyliques, leurs sels acides, les sels acides d'acides inorganiques, en particulier NaHSO₄, Na₂HPO₄ et NaH₂PO₄ et leurs mélanges.

5. Granulé régulateur de mousse selon l'une quelconque des revendications 1 à 4, **caractérisé en ce que** la matière de support contient un carbonate de métal alcalin et un acide de Bronsted dans des rapports pondéraux de 1:1 à 100:1, en particulier de 20:3 à 80:3.

6. Granulé régulateur de mousse selon l'une quelconque des revendications 1 à 5, **caractérisé en ce que** la matière de support présente de 40 % en poids à 90 % en poids, en particulier de 60 % en poids à 80 % en poids d'un carbonate de métal alcalin, et de 0,5 % en poids à 20 % en poids, en particulier de 1 % en poids à 9 % en poids d'un acide de Bronsted.

7. Granulé régulateur de mousse selon l'une quelconque des revendications 1 à 6, **caractérisé en ce que**, dans l'organopolysiloxane (A), le groupe Ph représente une unité qui contient au moins 1 noyau benzénique -C₆R₅, dans lequel chaque groupe R représente, de manière réciproquement indépendante, un atome d'hydrogène, un atome d'halogène, un groupe hydroxyle, un groupe alcoxy contenant de 1 à 6 atomes de carbone ou un groupe d'hydrocarbure monovalent contenant de 1 à 12 atomes de carbone, ou dans lequel deux groupes R ou plus représentent ensemble un groupe d'hydrocarbure divalent.

8. Granulé régulateur de mousse selon l'une quelconque des revendications 1 à 7, **caractérisé en ce que**, dans l'organopolysiloxane (A), le nombre moyen d'unités siloxane par molécule s'élève de 5 à 5000.

9. Granulé régulateur de mousse selon l'une quelconque des revendications 1 à 8, **caractérisé en ce que**, dans l'organopolysiloxane (A), sont contenus au moins 50 % d'unités de diorganosiloxane répondant à la formule -SiYY'O- et jusqu'à 50 % d'unités de diorganosiloxane répondant à la formule -SiYXPhO-, Y représentant un groupe alkyle contenant de 1 à 4 atomes de carbone et Y' représentant un groupe d'hydrocarbure aliphatique contenant de 1 à 24 atomes de carbone, en particulier de 1 à 6 atomes de carbone.

10. Granulé régulateur de mousse selon l'une quelconque des revendications 1 à 9, **caractérisé en ce que**, dans l'organopolysiloxane (A), le groupe X représente un groupe alkylène contenant de 1 à 24 atomes de carbone et Ph représente un groupe phényle.

11. Granulé régulateur de mousse selon l'une quelconque des revendications 1 à 10, **caractérisé en ce que**, dans l'organopolysiloxane (A), le groupe -X-Ph représente un groupe 2-phénylpropyle.

12. Granulé régulateur de mousse selon l'une quelconque des revendications 1 à 11, **caractérisé en ce que** l'organopolysiloxane (A) contient au moins un site de réticulation entre des chaînes polymères de siloxane, qui répond à la formule -X'- ou -X'-Sx-X'-, où X représente un groupe organique aliphatique divalent qui est lié à un atome de carbone via un atome de silicium, et Sx représente un groupe d'organosiloxane.

13. Granulé régulateur de mousse selon l'une quelconque des revendications 1 à 12, **caractérisé en ce que** la résine d'organosilicium (B) représente une silicone non linéaire, qui est constituée par des unités siloxane répondant à la formule R'ₐSiO_{(4-a)/2}, dans laquelle R' représente un groupe hydroxyle, un groupe d'hydrocarbure ou un groupe d'hydrocarbone-oxy et a prend une valeur moyenne de 0,5 à 2,4.

14. Granulé régulateur de mousse selon l'une quelconque des revendications 1 à 13, **caractérisé en ce que** la résine d'organosilicium (B) représente une résine de siloxane qui est constituée par des groupes trihydroxycarbone-siloxy monovalents répondant à la formule R"SiO_{1/2} et par des groupes tétrafonctionnels SiO_{4/2} dans la plage d'un rapport numéral de 0,4:1 à 1,1:1, R" représentant un groupe alkyle.

15. Granulé régulateur de mousse selon l'une quelconque des revendications 1 à 14, **caractérisé en ce que** la résine d'organosilicium (B) présente une granulométrie moyenne dans la plage de 2 µm à 50 µm.

16. Granulé régulateur de mousse selon l'une quelconque des revendications 1 à 15, **caractérisé en ce que** la matière de charge hydrophobe (C) est choisie parmi le groupe constitué par l'acide silicique, le dioxyde de titane, du quartz broyé, l'oxyde d'aluminium, des aluminosilicates, des cires de polyéthylène, des cires microcristallines, l'oxyde de zinc, l'oxyde de magnésium, des sels d'acides carboxyliques aliphatiques, la cyclohexylamine, des amides alkyle, du SiO₂, ainsi que leurs mélanges.

17. Granulé régulateur de mousse selon l'une quelconque des revendications 1 à 16, **caractérisé en ce que** la matière de charge hydrophobe (C) représente un acide silicique possédant une granulométrie moyenne de 0,5 µm à 30 µm.

18. Granulé régulateur de mousse selon l'une quelconque des revendications 1 à 17, **caractérisé en ce que** la cire de paraffine régulatrice de mousse est solide à la température ambiante et est présente sous une forme complètement liquide à 100 °C.

19. Granulé régulateur de mousse selon l'une quelconque des revendications 1 à 18, **caractérisé en ce que** la cire de paraffine présente, à 40°C, une fraction liquide d'au moins 50 % en poids, en particulier de 55 % en poids à 80 % en poids, et à 60 °C, une fraction liquide d'au moins 90 % en poids.

20. Granulé régulateur de mousse selon l'une quelconque des revendications 1 à 19, **caractérisé en ce que** la cire de paraffine est présente en mélange avec de l'amide d'acide digras qui dérive de diamines en C₂-C₇ et d'acides gras en C₁₂-C₂₂.

21. Granulé régulateur de mousse selon la revendication 20, **caractérisé en ce que** le rapport pondéral de la cire de paraffine à l'amide d'acide digras se situe dans la plage de 50:1 à 1:1, en particulier de 10:1 à 5:1.

22. Utilisation d'un granulé régulateur de mousse selon l'une quelconque des revendications 1 à 21 pour la régulation de la mousse d'agents de lavage ou de nettoyage comprenant un agent tensioactif non ionique ramifié en milieu de chaîne, répondant à la formule générale I
R¹-O-(CH₂CH₂O)ₚ-H (I)
dans laquelle R¹ représente un résidu alkyle ou un résidu alcényle ramifié en milieu de chaîne comprenant de 10 à 22 atomes de carbone et présente un degré de ramification moyen de 0,25 à 2,8, en particulier de 1,2 à 2,5, et p représente des nombres de 1 à 9.

23. Utilisation selon la revendication 22, **caractérisée en ce que** l'agent de lavage ou de nettoyage comprend un agent tensioactif non ionique ramifié en milieu de chaîne répondant à la formule générale I dans laquelle R¹ représente un résidu alkyle et/ou alcényle ramifié en milieu de chaîne comprenant de 8 à 18 atomes de carbone, en particulier 13 atomes de carbone, et présente un degré de ramification moyen de 1,7 à 2,4 et p représente des nombres de 3 à 7.

24. Utilisation selon la revendication 22 ou 23, **caractérisée en ce que** l'agent de lavage ou de nettoyage contient de 0,1 % en poids à 30 % en poids, en particulier de 0,5 % en poids à 20 % en poids, et de manière particulièrement préférée de 1 % en poids à 15 % en poids d'un agent tensioactif non ionique ramifié en milieu de chaîne.

25. Utilisation selon l'une quelconque des revendications 22 à 24, **caractérisée en ce que** l'agent de lavage ou de nettoyage contient des alkylsulfates et/ou des alkylsulfonates ramifiés en milieu de chaîne, choisis parmi le groupe comprenant des alkylsulfates et/ou des alkylsulfonates comprenant un résidu alkyle ramifié en milieu de chaîne contenant de 10 à 22, en particulier de 8 à 18 et de manière particulièrement préférée 13 atomes de carbone, et présentant un degré de ramification moyen de 1,7 à 2,4.

26. Procédé pour la préparation d'un granulé régulateur de mousse selon l'une quelconque des revendications 1 à 21, **caractérisé en ce qu'**on applique une émulsion aqueuse régulatrice de mousse, qui contient de 16 % en poids à 70 % en poids de la substance active régulatrice de mousse à base de cire de paraffine et de silicone, de 2 % en poids à 15 % en poids d'un émulsifiant non ionique et/ou anionique, et de l'eau en une quantité qui n'est pas supérieure à 80 % en poids, sur la matière de support particulaire.

27. Procédé selon la revendication 26, **caractérisé en ce que** l'émulsion aqueuse régulatrice de mousse contient un mélange de cire de paraffine et de silicone dans le rapport pondéral de 11:1 à 1,8:1, en particulier de 5:1 à 2:1.

28. Procédé selon la revendication 26 ou 27, **caractérisé en ce qu'**on procède, dans un mélangeur de granulation, à une granulation constitutive telle que l'on mélange intimement une quantité de 40 à 110 parties en poids, en particulier de 60 à 90 parties en poids d'une matière de support et, tout en procédant à une granulation, on ajoute une quantité de 15 à 50 parties en poids, en particulier de 25 à 35 parties en poids de l'émulsion régulatrice de mousse éventuellement chauffée à une température dans la plage de 70 °C à 180 °C.
